# EUROPEAN PATENT APPLICATION

(11) **EP 4 550 088 A1**
(43) Date of publication of application: **07.05.2025**
(21) Application number: 24171517.6
(22) Date of filing: 22.04.2024
(51) Int. Cl.: G06F 1/3206, G06F 1/3231, H04N 1/00

(54) **INFORMATION PROCESSING SYSTEM, IMAGE FORMING SYSTEM, PROGRAM, INFORMATION PROCESSING METHOD AND IMAGE FORMING METHOD**

(30) Priority: 31.10.2023 JP 2023187175
(71) Applicant: FUJIFILM Business Innovation Corp., Minato-ku Tokyo (JP)
(72) Inventor: NARUSHIMA, Kazuhiko, Kanagawa (JP); OGATA, Kenta, Kanagawa (JP); MIKI, Masayoshi, Kanagawa (JP)
(74) Representative: Haseltine Lake Kempner LLP

(57) **Abstract**

An information processing system includes a light sensor enabled to detect, on a per region basis, a presence of an object in a detection zone divided into multiple regions; and a processor configured to: set to be a first region each of the regions having an expected value lower than a predetermined threshold, the expected value calculated in accordance with a use count at which an information processing apparatus is used during a predetermined period of time from the detection of the object in the region in the detection zone; and if the object enters the first region with the information processing apparatus in a first power consumption mode, cause the information processing apparatus not to shift from the first power consumption mode to a second power consumption mode higher in power consumption than the first power consumption mode.

## Description

### Background

### (i) Technical Field

The present disclosure relates to an information processing system, an image forming system, a program, an information processing method and an image forming method.

### (ii) Related Art

Japanese Patent No. 6478469 discloses an image forming apparatus that switches return-to-sleep criteria in response to whether a sensor located at a diagonally upward position of the image forming apparatus starts detecting temperature that is equal to or above predetermined temperature.

Japanese Unexamined Patent Application Publication No. 2015-154377 discloses an image processing apparatus that switches a powering status thereof to a standard powering mode if a human sensor that is installed on the image processing apparatus in a manner such that the detection surface of the human sensor looks diagonally upward has detected a human hand above an operation unit of the image processing apparatus.

Japanese Patent No. 6415632 discloses an image processing apparatus that switches a powering status thereof to a standard powering mode if a human sensor that is installed on the image processing apparatus in a manner such that the detection surface of the human sensor looks diagonally upward has detected a human hand above an operation unit of the image processing apparatus.

An apparatus that shifts from a power saving mode to a startup mode in response to when a human sensor has detected a person in a detection zone has been implemented.

If the apparatus shifts from the power saving mode to the startup mode in response to the detection of any entity in the detection zone, a person or any obstacle simply passing by the apparatus may be determined to be a user. The apparatus thus shifts from the power saving mode to the startup mode, leading to an increase in power consumption.

### Summary

Accordingly, it is an object of the present disclosure to provide an information processing system, image forming system, program, information processing method and image forming method that address reducing the power consumption of an apparatus in comparison with the case in which the apparatus is shifted from a power saving mode to a startup mode in response to detection results that are obtained by simply detecting any entity within a detection zone.

According to a first aspect of the present disclosure, there is provided an information processing system including a light sensor enabled to detect, on a per divided region basis, a presence of an object in a detection zone divided into multiple regions; and a processor configured to: set to be a first region each of the regions having an expected value lower than a predetermined threshold, the expected value calculated in accordance with a use count at which an information processing apparatus is used during a predetermined period of time from the detection of the object in the region in the detection zone; and if the object enters the first region with the information processing apparatus in a first power consumption mode, cause the information processing apparatus not to shift from the first power consumption mode to a second power consumption mode higher in power consumption than the first power consumption mode.

According to a second aspect of the present disclosure, in the information processing system according to the first aspect, the processor is configured to, if the object enters a second region different from the first region in the detection zone, cause the information processing apparatus to shift from the first power consumption mode to the second power consumption mode.

According to a third aspect of the present disclosure, in the information processing system according to one of the first and second aspects, the processor is configured to, if the object is detected, during the predetermined period of time from the detection of the object in the region, in a detection zone that is closer to the information processing apparatus than the region is to the information processing apparatus, calculate the expected value, based on an assumption that the information processing apparatus has been used.

According to a fourth aspect of the present disclosure, in the information processing system according to one of the first and second aspects, the processor is configured to: if an operation unit has received an operation during the predetermined period of time from the detection of the object in the region, calculate the expected value, based on an assumption that the information processing apparatus has been used.

According to a fifth aspect of the present disclosure, in the information processing system according to one of the first through fourth aspects, the processor is configured to, if the object has been continuously detected for the predetermined period of time or longer in the region, set the region to be the first region.

According to a sixth aspect of the present disclosure, in the information processing system according to one of the first through fifth aspects, the processor is configured to cause the light sensor to stop detecting light in the first region.

According to a seventh aspect of the present disclosure, in the information processing system according to one of the first through fifth aspects, the processor is configured to, even when the light sensor has detected the object in the first region, cause the information processing apparatus not to shift from the first power consumption mode to the second power consumption mode.

According to an eighth aspect of the present disclosure, there is provided an image forming system including: a light sensor enabled to detect a presence of an object in each of a first detection zone divided into multiple regions and a second detection zone that is closer to an image forming apparatus than the first detection zone is; and a processor configured to: set to be a first region each of the regions having an expected value lower than a predetermined threshold, the expected value calculated in accordance with a use count at which an information processing apparatus is used during a predetermined period of time from the detection of the object in the region in the first detection zone; if the object enters the first region with the image forming apparatus in a first power consumption mode, cause the image forming apparatus not to shift from the first power consumption mode to a second power consumption mode higher in power consumption than the first power consumption mode; if the object enters a second region different from the first region in the first detection zone, cause the image forming apparatus to shift from the first power consumption mode to the second power consumption mode; and if the object enters the second detection zone with the image forming apparatus in the second power consumption mode, cause the image forming apparatus to shift from the second power consumption mode to a third power consumption mode higher in power consumption than the second power consumption mode.

According to a ninth aspect of the present disclosure, there is provided a program causing a computer to execute a process, the process including: detecting, on a per region basis, a presence of an object in a detection zone divided into multiple regions; setting to be a first region each of the regions having an expected value lower than a predetermined threshold, the expected value calculated in accordance with a use count at which an information processing apparatus is used during a predetermined period of time from the detection of the object in the region in the detection zone; and if the object enters the first region with the information processing apparatus in a first power consumption mode, causing the information processing apparatus not to shift from the first power consumption mode to a second power consumption mode higher in power consumption than the first power consumption mode.

According to a tenth aspect of the present disclosure, there is provided a program causing a computer to execute a process, the process including: detecting a presence of an obj ect in each of a first detection zone divided into multiple regions and a second detection zone that is closer to an image forming apparatus than the first detection zone is; setting to be a first region each of the regions having an expected value lower than a predetermined threshold, the expected value calculated in accordance with a use count at which an information processing apparatus is used during a predetermined period of time from the detection of the object in the region in the first detection zone; if the object enters the first region with the image forming apparatus in a first power consumption mode, causing the image forming apparatus not to shift from the first power consumption mode to a second power consumption mode higher in power consumption than the first power consumption mode; if the object enters a second region different from the first region in the first detection zone, causing the image forming apparatus to shift from the first power consumption mode to the second power consumption mode; and if the object enters the second detection zone with the image forming apparatus in the second power consumption mode, causing the image forming apparatus to shift from the second power consumption mode to a third power consumption mode higher in power consumption than the second power consumption mode.

According to an eleventh aspect of the present disclosure, there is provided an information processing method including: detecting, on a per region basis, a presence of an object in a detection zone divided into a plurality of regions; setting to be a first region each of the regions having an expected value lower than a predetermined threshold, the expected value calculated in accordance with a use count at which an information processing apparatus is used during a predetermined period of time from the detection of the object in the region in the detection zone; and if the object enters the first region with the information processing apparatus in a first power consumption mode, causing the information processing apparatus not to shift from the first power consumption mode to a second power consumption mode higher in power consumption than the first power consumption mode.

According to a twelfth aspect of the present disclosure, there is provided an image forming method including: detecting a presence of an object in each of a first detection zone divided into a plurality of regions and a second detection zone that is closer to an image forming apparatus than the first detection zone is; setting to be a first region each of the regions having an expected value lower than a predetermined threshold, the expected value calculated in accordance with a use count at which an information processing apparatus is used during a predetermined period of time from the detection of the object in the region in the first detection zone; if the object enters the first region with the image forming apparatus in a first power consumption mode, causing the image forming apparatus not to shift from the first power consumption mode to a second power consumption mode higher in power consumption than the first power consumption mode; if the object enters a second region different from the first region in the first detection zone, causing the image forming apparatus to shift from the first power consumption mode to the second power consumption mode; and if the object enters the second detection zone with the image forming apparatus in the second power consumption mode, causing the image forming apparatus to shift from the second power consumption mode to a third power consumption mode higher in power consumption than the second power consumption mode.

The information processing system according to the first aspect may lead to a lower power consumption in the information processing apparatus than when the information processing apparatus is shifted from the power saving mode to the startup mode in response to detection results that are obtained by simply detecting any object within the detection zone.

The information processing system according to the second aspect may lead to a lower power consumption in the information processing apparatus than when the information processing apparatus is shifted from the power saving mode to the startup mode in response to detection results that are obtained by simply detecting any object within the detection zone.

The information processing system according to the third aspect may calculate a use rate of the information processing apparatus depending on whether the object is detected, during the predetermined period of time from the detection of the object in the region, in a detection zone that is closer to the information processing apparatus than the region is to the information processing apparatus.

The information processing system according to the fourth aspect may calculate the use rate of the information processing apparatus depending on whether the information processing apparatus is operated by the user during the predetermined period of time from the detection of the object in the region.

The information processing system according to the fifth aspect may cause the information processing apparatus not to shift from the power saving mode to the startup mode even when the object enters a region where the information processing apparatus is not likely to be used.

The information processing system according to the sixth aspect may lead to a lower power consumption in the information processing apparatus than when the object in the first region is detected by the light sensor.

The information processing system according to the seventh aspect may cause the information processing apparatus not to shift from the power saving mode to the startup mode even when the object enters the first region with the light sensor unchanged in detection setting.

The image forming system according to the eight aspect may lead to a lower power consumption in the image forming apparatus than when the image forming apparatus is shifted from the power saving mode to the startup mode in response to detection results that are obtained by simply detecting any object within the detection zone.

The program according to the ninth aspect may lead to a lower power consumption in the information processing apparatus than when the information processing apparatus is shifted from the power saving mode to the startup mode in response to detection results that are obtained by simply detecting any object within the detection zone.

The program according to the tenth aspect may lead to a lower power consumption in the image forming apparatus than when the image forming apparatus is shifted from the power saving mode to the startup mode in response to detection results that are obtained by simply detecting any object within the detection zone.

The information processing method according to the eleventh aspect may lead to a lower power consumption in the information processing apparatus than when the information processing apparatus is shifted from the power saving mode to the startup mode in response to detection results that are obtained by simply detecting any object within the detection zone.

The image processing method according to the twelfth aspect may lead to a lower power consumption in the image forming apparatus than when the image forming apparatus is shifted from the power saving mode to the startup mode in response to detection results that are obtained by simply detecting any object within the detection zone.

### Brief Description of the Drawings

Exemplary embodiments of the present disclosure will be described in detail based on the following figures, wherein:
Fig. 1 is an external view illustrating a general configuration of an image forming apparatus of a first exemplary embodiment;
Fig. 2 is a front view of a general configuration of a light sensor;
Fig. 3 illustrates a general configuration of a vertical cavity surface emitting laser (VCSEL) array;
Fig. 4 is an optical path diagram of light emitted from the VCSEL array on an X-Z plane;
Fig. 5 is a block diagram illustrating a hardware configuration of an image forming apparatus;
Fig. 6 is a block diagram illustrating a functional configuration of the image forming apparatus;
Fig. 7 illustrates a detection zone of a light sensor of the first exemplary embodiment;
Fig. 8 is a flowchart illustrating a process flow of power consumption control of the image forming apparatus in accordance with the first exemplary embodiment;
Fig. 9 illustrates an installed state of the image forming apparatus of a first example;
Fig. 10 illustrates a table listing usage environment data of the image forming apparatus of the first example;
Fig. 11 illustrates an installed state of an image forming apparatus of a second example;
Fig. 12 illustrates a table listing usage environment data of the image forming apparatus of the second example;
Fig. 13 illustrates an installed state of an image forming apparatus of a third example;
Fig. 14 illustrates a table listing usage environment data of the image forming apparatus of the third example;
Fig. 15 illustrates a detection zone of a light sensor in an image forming apparatus of a second exemplary embodiment; and
Fig. 16 is a flowchart illustrating a process flow of power consumption control of the image forming apparatuses in accordance with the exemplary embodiments.

### Detailed Description

### First Exemplary Embodiment

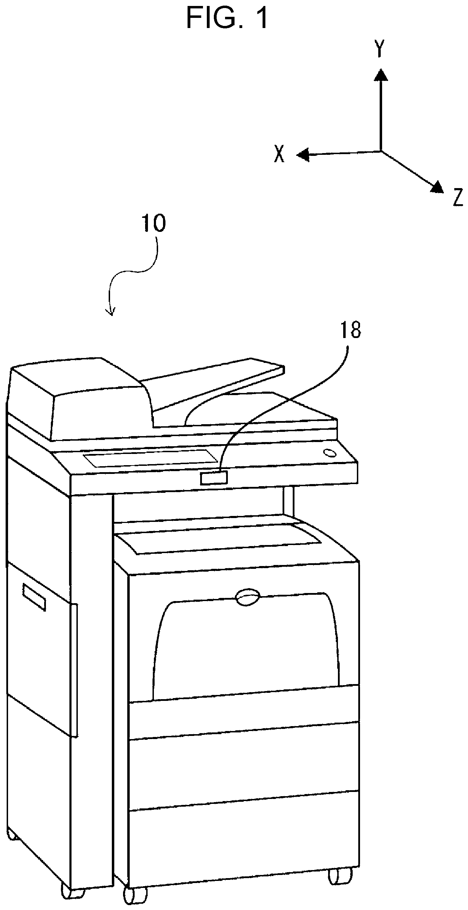

Exemplary embodiments of the disclosure are described below in detail with reference to the drawings. Fig. 1 is an external view illustrating a general configuration of an image forming apparatus 10 of a first exemplary embodiment. X, Y and Z axes in Fig. 1 represent coordinate axes of the image forming apparatus 10. The X axis denotes a horizontal direction and a width direction of the image forming apparatus 10, the Y axis denotes a vertical direction and a vertical direction of the image forming apparatus 10 and the Z axis denotes a horizontal direction and a depth direction of the image forming apparatus 10.

As illustrated in Fig. 1, the image forming apparatus 10 is a multi-function apparatus and has multiple functions including a print function, scan function, copy function and fax function. The image forming apparatus 10 is an example of an information processing apparatus or an information processing system in the technique of the disclosure.

The image forming apparatus 10 includes a light sensor 18 that detects a user who uses the image forming apparatus 10. The user typically approaches the location where the image forming apparatus 10 is installed and the light sensor 18 is set up to detect the user.

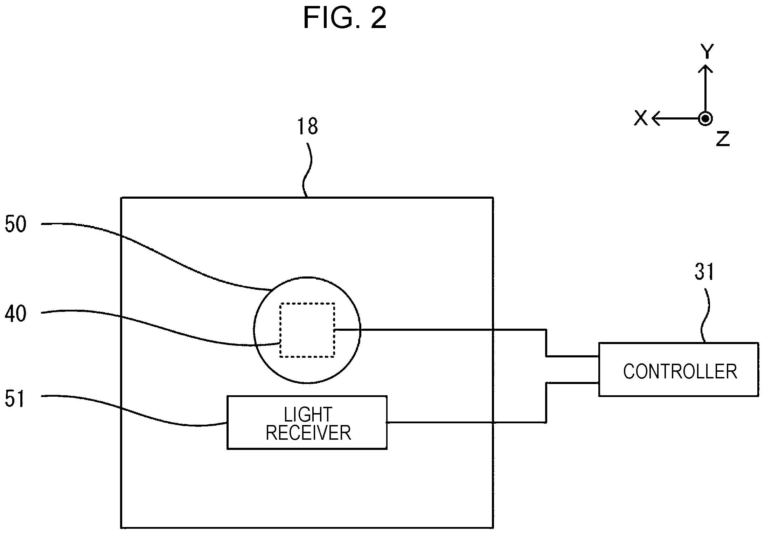

Fig. 2 is a front view of a general configuration of the light sensor 18. As illustrated in Fig. 2, the light sensor 18 includes a vertical cavity surface emitting laser (VCSEL) array 40 having multiple light emission regions B, an optical system 50 that deflects light rays respectively emitted from the light emission regions B to different directions, and a light receiver 51 that detects reflected light rays responsive to the light rays emitted from the optical system 50.

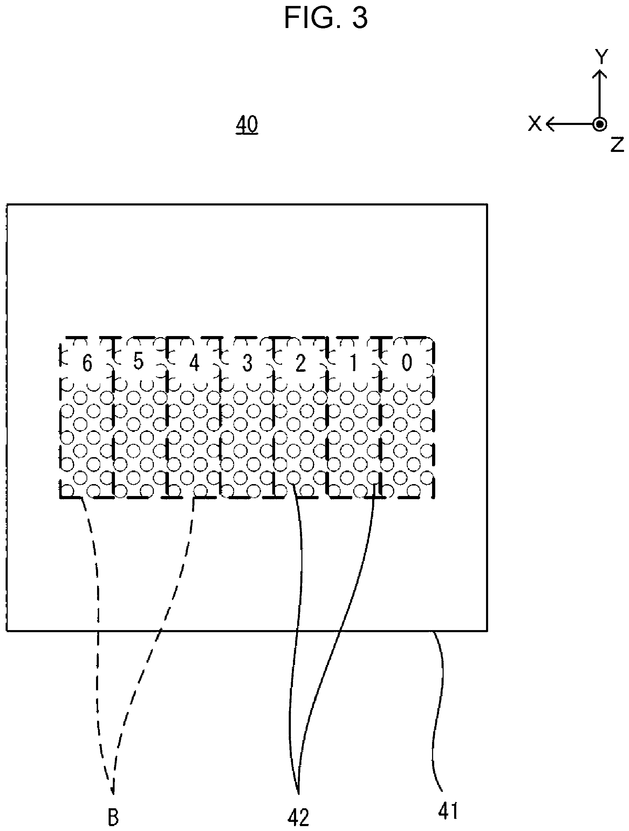

Fig. 3 illustrates a general configuration of the VCSEL array 40. Referring to Fig. 3, the VCSEL array 40 includes VCSEL laser light emitting elements 42 that are arranged in a staggered fashion in a portion of a board 41.

The VCSEL array 40 includes the light emission regions B that are arranged in the X axis direction. Each light emission region B in the VCSEL array 40 includes multiple light emitting elements 42. The light emitting elements 42 are controlled to be turned on or off on a per light emission region B in the VCSEL array 40. Fig. 3 illustrates seven light emission regions B arranged in the X axis direction and respectively denoted by number 0 through number 6.

The optical system 50 is arranged in a light emission direction of the VCSEL array 40 and deflects light rays respectively emitted by the light emission regions B to mutually different directions. The optical system 50 is arranged such that the optical axis of the optical system 50 is perpendicular to an entire light emission region of the VCSEL array 40 at the center of the light emission region.

The optical system 50 includes, for example, lenses. If the optical system 50 includes lenses, no particular limitation is imposed on the shape and number of lenses and any configuration of the lenses is acceptable as long as the light rays respectively emitted from the light emission regions B are deflected to the different directions.

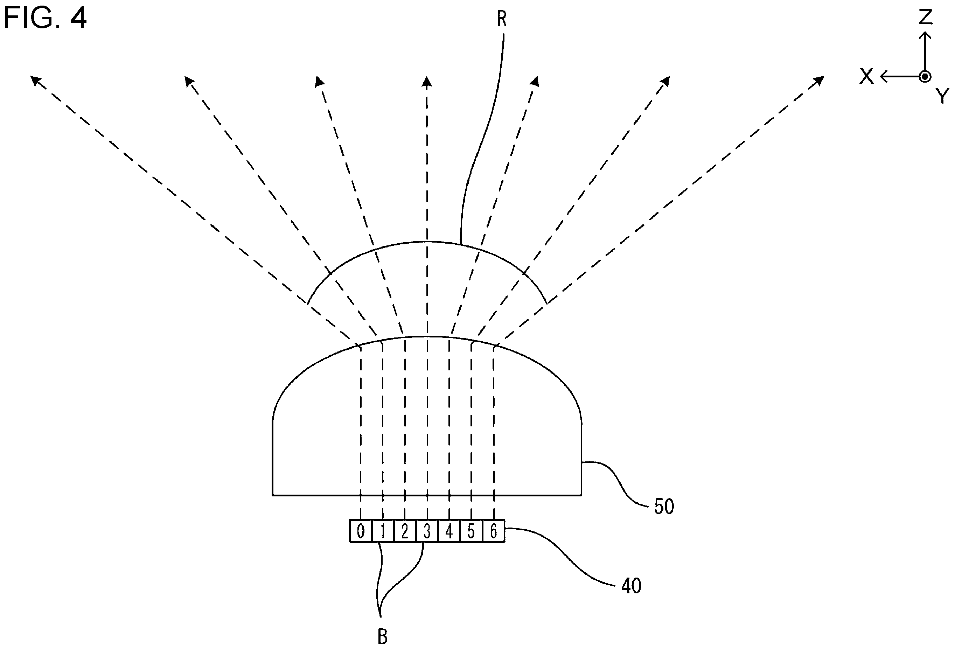

Fig. 4 is an optical path diagram of light emitted from the VCSEL array 40 on an X-Z plane. The diagram in Fig. 4 does not illustrate the actual shape of the VCSEL array 40 and optical system 50 but illustrates a simplified configuration of the VCSEL array 40 and optical system 50.

Referring to Fig. 4, the VCSEL array 40 includes the seven light emission regions B arranged in the X axis direction in the first exemplary embodiment.

The optical system 50 deflects the light rays respectively emitted from the number 0 of the light emission regions B to the number 6 of the light emission regions B to the different directions. The irradiation angle of light of the light sensor 18 is an angle made between the emission angles of the two light rays emitted from the outermost light emission regions B on the optical system 50. For example, the irradiation angle of light of the light sensor 18 in the first exemplary embodiment is 160°.

The light receiver 51 includes, for example, a light receiving element, such as a photodetector. The number of light receiving elements is not limited to one and multiple light receiving elements may be employed.

The light sensor 18 is mounted in the image forming apparatus 10 in a manner such that the X axis direction of the light sensor 18 is aligned with the horizontal direction of the image forming apparatus 10 and the Y axis direction of the light sensor 18 is aligned with the vertical direction of the image forming apparatus 10.

The light sensor 18 causes one of the light emission regions B arranged in the X axis direction to emit light. The light receiver 51 then detects reflected light responsive to the light emitted from the light emission region B.

In response to a signal detected by the light receiver 51, the light sensor 18 calculates a time difference between the timing of the light emission of the light emission region B and the timing of the detection of the reflected light of the light receiver 51.

In response to the calculated time difference, the light sensor 18 calculates a distance from the light sensor 18 to an object within a detection zone of the light emission region B. No reflected light within the detection zone corresponding to the light emission region B reveals that no object is present within the detection zone.

When the detection operation of an object within one light emission region B is complete, the light sensor 18 performs the detection operation of an object on the remaining light emission regions B in the whole detection zone. The light sensor 18 thus repeats the detection operation in the whole detection zone.

As described above, the light sensor 18 is a human sensor that is able to detect the presence of an object in regions, into which the detection zone is divided and to which the light emission regions B of the VCSEL array 40 respectively correspond. The light sensor 18 thus detects a distance from the light sensor 18 to the detected object.

The image forming apparatus 10 of the first exemplary embodiment thus controls operational status such that the detection of a user of the image forming apparatus 10 with the light sensor 18 causes the image forming apparatus 10 to return from a power saving mode to a startup mode (namely, a standard operation mode).

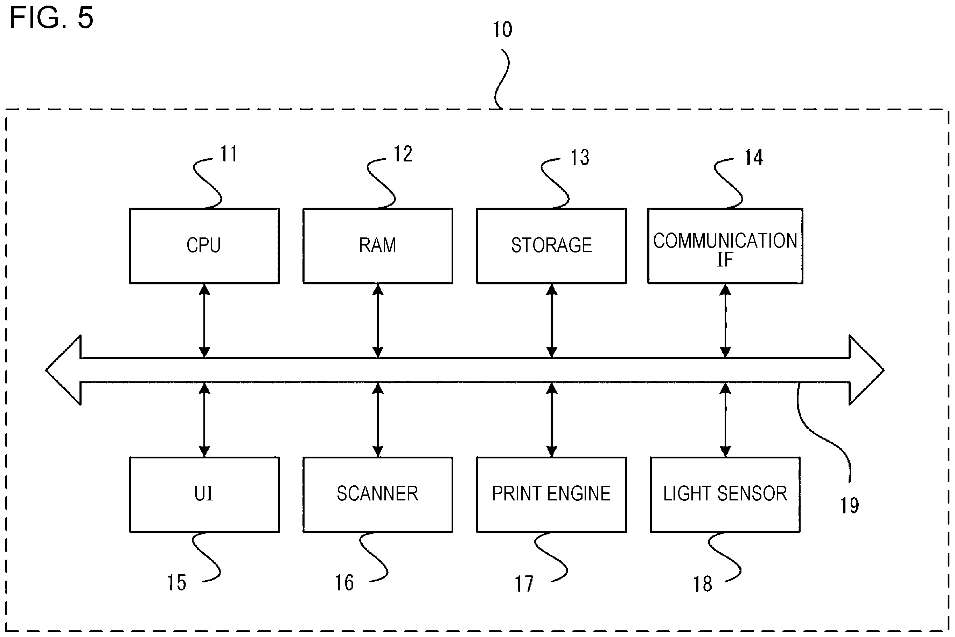

The hardware configuration of the image forming apparatus 10 of the first exemplary embodiment is described below. Fig. 5 is a block diagram illustrating a hardware configuration of the image forming apparatus 10.

Referring to Fig. 5, the image forming apparatus 10 includes a central processing unit (CPU) 11, random-access memory (RAM) 12, storage 13, such as a hard disk drive, communication interface (IF) 14, user interface (UI) 15, including a touch panel and buttons, scanner 16, print engine 17 and light sensor 18. These elements are connected to each other via a control bus 19.

The CPU 11 is a processor that controls the operation of the image forming apparatus 10 by performing a predetermined process in response to a control program stored on the RAM 12 or storage 13. According to the first exemplary embodiment, the CPU 11 reads the control program from the RAM 12 or storage 13 and executes the read program. The disclosure is not limited to this configuration. The control program may be delivered in a recorded form on a computer readable recording medium. For example, the control program may be delivered in a recorded form on an optical disc, such a compact disc (CD) - read-only memory () or digital versatile disc (DVD) ROM, or semiconductor memory, such as a universal serial bus (USB) memory or memory card. The control program may be retrieved via a communication network connected to the communication IF 14 from an external apparatus.

The communication IF 14 transmits data to or receives data from an external apparatus. The UI 15 receives an enter instruction from a user. The scanner 16 reads as image data a document set in the image forming apparatus 10. The print engine 17 prints an image on a recording medium, such as printing paper, via operational steps including charging, exposure, development, transfer and fixing.

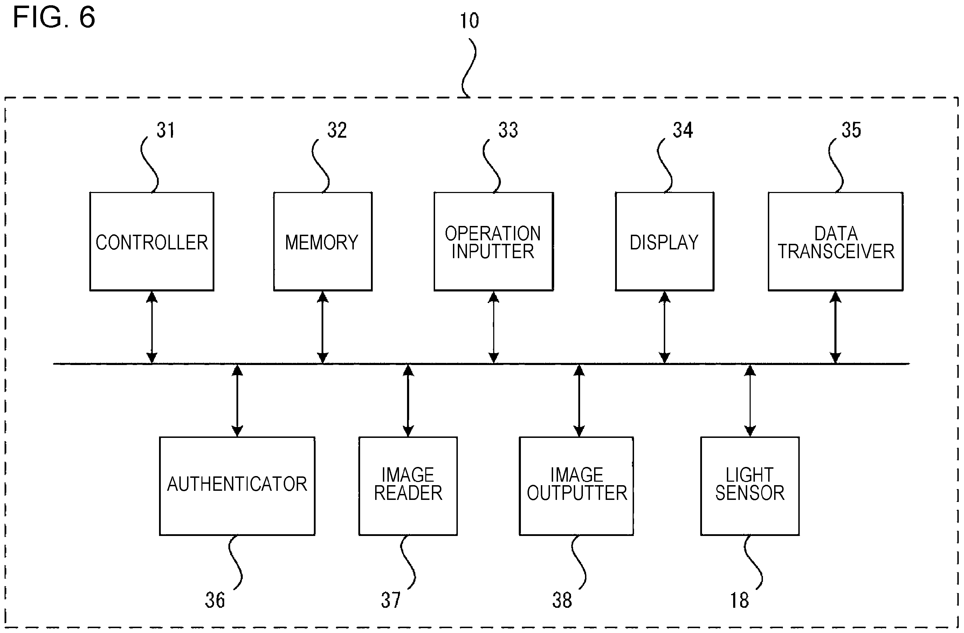

Functions and configuration of the image forming apparatus 10 of the first exemplary embodiment are described below. Fig. 6 is a block diagram illustrating a functional configuration of the image forming apparatus 10.

Referring to Fig. 6, the image forming apparatus 10 of the first exemplary embodiment includes a controller 31, memory 32, operation inputter 33, display 34, data transceiver 35, authenticator 36, image reader 37, image outputter 38 and light sensor 18.

The controller 31 controls the overall operation of the image forming apparatus 10 and, for example, performs control in response to an instruction from the user to read the image of a document with the image reader 37 and output print data from the image outputter 38. The memory 32 stores the control program and data.

The operation inputter 33 inputs information on a variety of operations performed by the user. The display 34, controlled by the controller 31, displays a variety of information to the user. The data transceiver 35 transmits data to or receives data from an external apparatus. The authenticator 36 performs an authentication operation on a user who is going to use the image forming apparatus 10.

The image reader 37, controlled by the controller 31, reads the image of a document that is set. The image outputter 38, controlled by the controller 31, outputs an image to a recording medium, such as a paper sheet.

The controlling of the operational status of the image forming apparatus 10 is described below. The controller 31 may change a power consumption mode of the image forming apparatus 10 by changing power supplying status to each of the controller 31, touch panel, image reader 37 and image outputter 38. The touch panel is a device that operates as both the operation inputter 33 and the display 34.

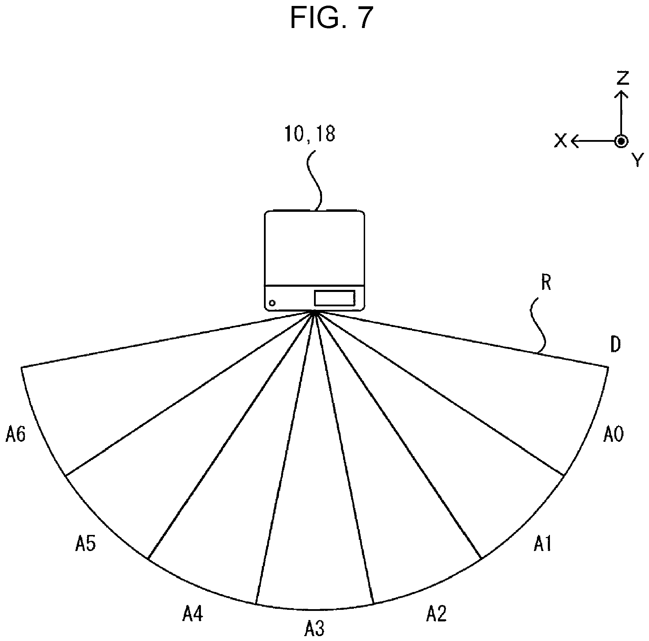

The image forming apparatus 10 of the first exemplary embodiment switches between a first power consumption mode and a second power consumption mode in response to the detection of an object within a detection zone R (see Fig. 7) of the light sensor 18. The image forming apparatus 10 consumes the lowest power in the first power consumption mode as a power saving mode while consuming higher power in the second power consumption mode as a startup mode than in the first power consumption mode.

If the image forming apparatus 10 is caused to shift from the power saving mode to the startup mode when any object is simply detected within the detection zone R of the light sensor 18, any person or object passing by near the image forming apparatus 10 may be determined to be the user and the image forming apparatus 10 may shift from the power saving mode to the startup mode, leading to higher power consumption in the image forming apparatus 10.

The controller 31 sets to be a first region a region having an expected value lower than a predetermined threshold. The expected value is calculated in accordance with a use count at which the image forming apparatus 10 is used during a predetermined period of time from the detection of the object in each of the regions in the detection zone R of the light sensor 18. If the object enters the first region with the image forming apparatus 10 in the first power consumption mode, the image forming apparatus 10 is caused not to shift from the first power consumption mode to the second power consumption mode.

If an object enters a second region different from the first region in the detection zone R of the light sensor 18, the controller 31 causes the image forming apparatus 10 shift from the first power consumption mode to the second power consumption mode.

The statement "the object enters the region" signifies that the object moves into the detection zone R from outside the detection zone R across the border of the detection zone R. In other words, the statement does not signify that the object moves from one region to another region within the detection zone R.

Detection of an object as a measurement target of the light sensor 18 in the image forming apparatus 10 is described below. Fig. 7 illustrates the detection zone R of the light sensor 18 of the first exemplary embodiment.

Referring to Fig. 7, the detection zone R is a sector having a radius D and centered on the light sensor 18, and the light sensor 18 of the first exemplary embodiment detects on a per region basis the presence of an object in the seven regions A0 through A6, into which the detection zone R is divided and to which the seven light emission regions B of the VCSEL array 40 respectively correspond.

The radius D of the detection zone R may be appropriately set in view of detection performance of the light sensor 18, moving speed of an object of interest, and time the image forming apparatus 10 takes to shift from the power saving mode to the startup mode. For example, the radius may be set to 1.75 m.

The controller 31 calculates the expected value in accordance with the use count at which the image forming apparatus 10 is used during the predetermined period of time from the detection of the object in each of the regions in the detection zone R of the light sensor 18, and the controller 31 sets to be the first region the region having the calculated expected value lower than a predetermined threshold.

In this way, a subset of the regions of the detection zone R of the light sensor 18 (the seven regions A0 through A6 in the first exemplary embodiment) may be set to be the first region. The subset of the regions to be set to be the first region may be one or more regions.

The "expected value" is determined by quantifying, with reference to comprehensively judging a variety of information, the level of possibility, at which the image forming apparatus 10 is used after the object enters each region. As the expected value is higher, the possibility of use of the image forming apparatus 10 is higher.

Specifically, a region where there is no possibility of use of the image forming apparatus 10 after the object enters each region is set to be the first region and the image forming apparatus 10 is caused not to shift from the power saving mode to the startup mode.

The expected value may include a use rate indicating a proportion of the use count of the image forming apparatus 10 within the predetermined period of time from the detection of the object in each of the divided regions to an overall detection count in the corresponding divided region. In this case, as the use rate is higher, the expected value is set to be higher.

If an object is detected in each of the regions within the predetermined period of time from the detection of the object in a detection zone that is closer to the image forming apparatus 10 than the regions are to the image forming apparatus 10, the controller 31 may calculate the use rate, based on the assumption that the image forming apparatus 10 has been used.

The statement "detection zone that is closer to the image forming apparatus 10 than the regions are to the image forming apparatus 10" refers to a region having a radius shorter than the radius D of the detection zone R. For example, the radius shorter than the radius D of the detection zone R is set to be 0.6 m.

If an operation is received by the operation inputter 33 (specifically, the UI 15, such as a touch panel) within the predetermined period of time from the detection of the object on each of the regions, the controller 31 may calculate the use rate, based on the assumption that the image forming apparatus 10 has been used.

Besides the setting method of the first region described above, the controller 31 may set to be the first region each of the regions if the object has been continuously detected from the region for the predetermined period of time or longer.

Besides the setting method of the first region described above, the controller 31 may set to be the first region a region that is specified by the user.

The controller 31 may cause the light sensor 18 to stop detecting the first region. Even when the light sensor 18 has detected the object in the first region, the controller 31 may cause the image forming apparatus 10 not to shift from the first power consumption mode to the second power consumption mode.

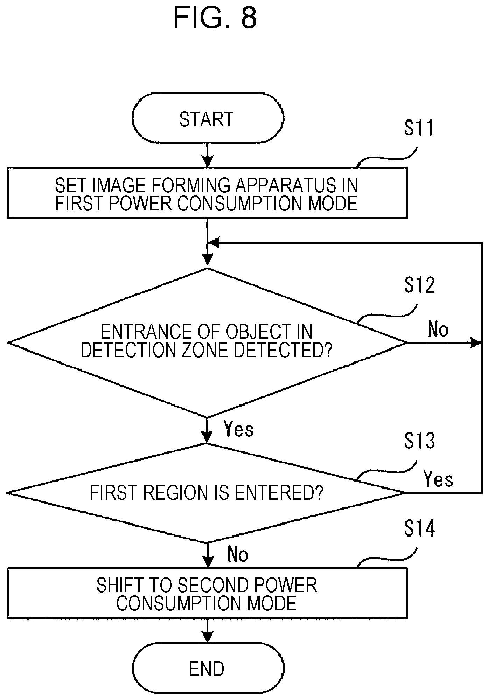

The control process flow of the power consumption control of the image forming apparatus 10 according to the first exemplary embodiment is described with reference to a flowchart in Fig. 8.

If no object is present within the detection zone R of the light sensor 18 in an initial state or if an object is present in the first region in the detection zone R of the light sensor 18 in the initial state, the controller 31 sets in step S 11 the power consumption mode of the image forming apparatus 10 to the first power consumption mode that is the lowest power consumption.

In step S12, the controller 31 determines whether the entrance of an object into the detection zone R of the light sensor 18 is detected.

In step S12, the controller 31 waits on standby until the entrance of an object is detected.

If it is determined in step S12 that the entrance of an object has been detected, the controller 31 determines in step S13 whether the object has entered the first region of the regions in the detection zone R.

If it is determined in step S13 that the entrance of an object has been detected, the controller 31 returns to step S12 and waits on standby until a new object enters the detection zone R.

If it is determined in step S13 that the object has not entered the first region (in other words, the object has entered a second region), the controller 31 causes in step S 14 the image forming apparatus 10 to shift to the second power consumption mode.

### First Example

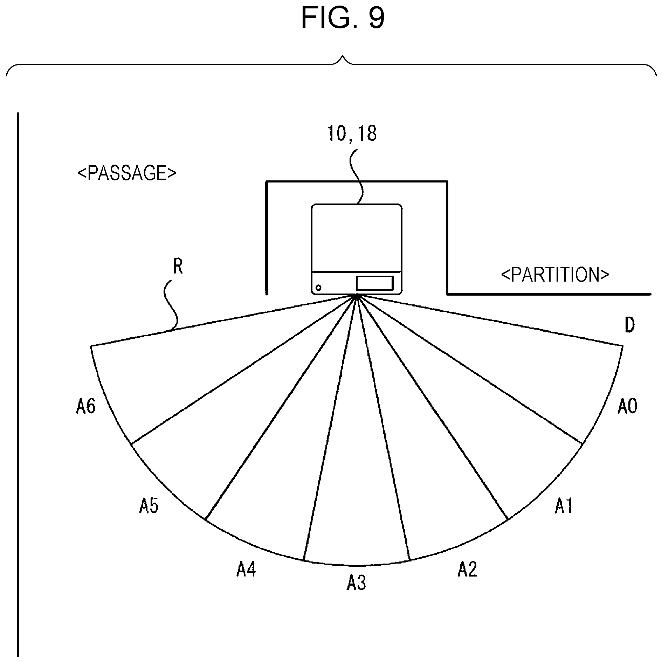

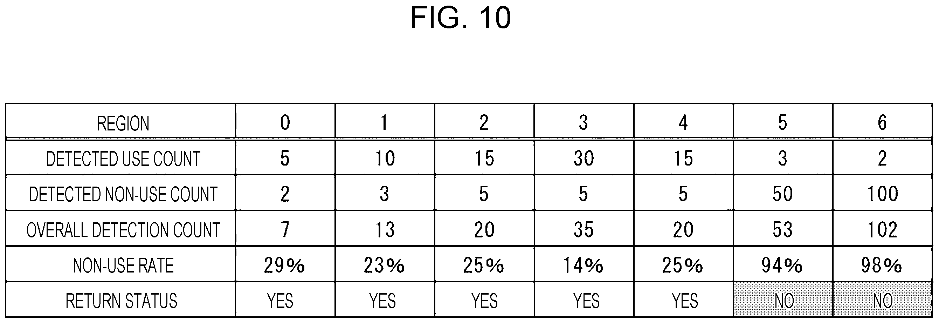

An image forming apparatus 10 as a first example of the first exemplary embodiment is described below. Fig. 9 illustrates an installed state of the image forming apparatus 10 of the first example. Fig. 10 illustrates a table listing usage environment data of the image forming apparatus 10 of the first example. Referring to Fig. 9, the lower side of the image forming apparatus 10 denotes the front side of the image forming apparatus 10.

As illustrated in Fig. 9, both lateral sides and rear side of the image forming apparatus 10 of the first example are surrounded by a partition. There is a passage on the right side of the image forming apparatus 10 (on the left side of the image forming apparatus 10 in Fig. 9).

In this installed state, a person who simply passes by and does not use the image forming apparatus 10 may approach the image forming apparatus 10.

During a specific period of time starting with the installation of the image forming apparatus 10, the controller 31 in the image forming apparatus 10 acquires the usage environment data listed in Fig. 10 by referring to detected status provided by the light sensor 18 and usage status of the image forming apparatus 10. The usage environment data is periodically updated and the setting of the usage environment data is also updated.

The usage environment data includes on a per region basis a detected use count, detected non-use count, overall detection count and non-use rate. The usage environment data also indicates a setting status on whether to return to, specifically, a setting status on whether each region is set to be the first region.

In the usage environment data in Fig. 10, the non-use rate is higher than a predetermined threshold (for example, 70%) in the regions A5 and A6 of the detection zone R on the right side of the image forming apparatus 10 and, in other words, an expected value at which the image forming apparatus 10 is used after the object enters each of the regions is lower than a predetermined threshold. For this reason, the controller 31 sets the regions A5 and A6 to no-return status (the first region).

### Second Example

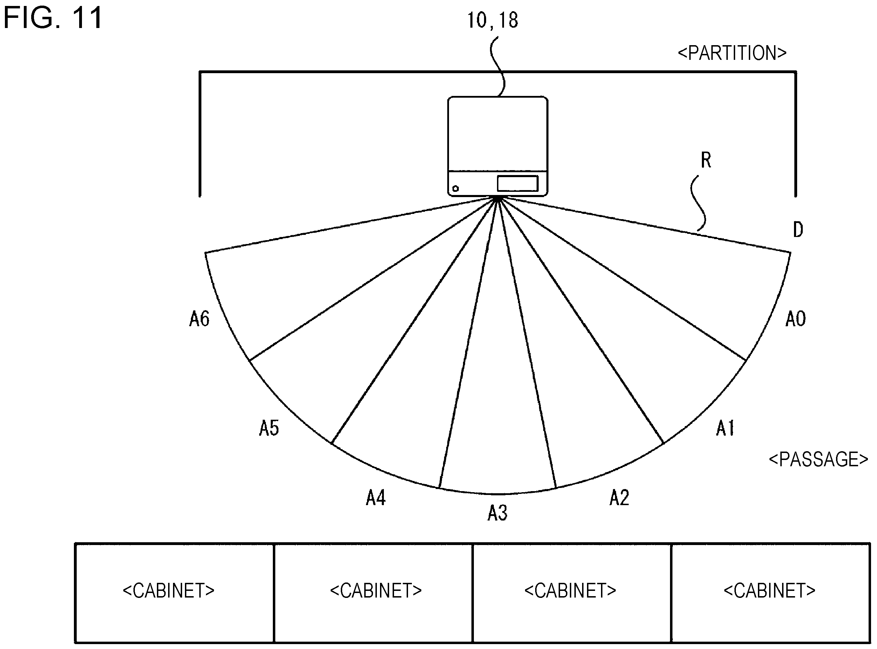

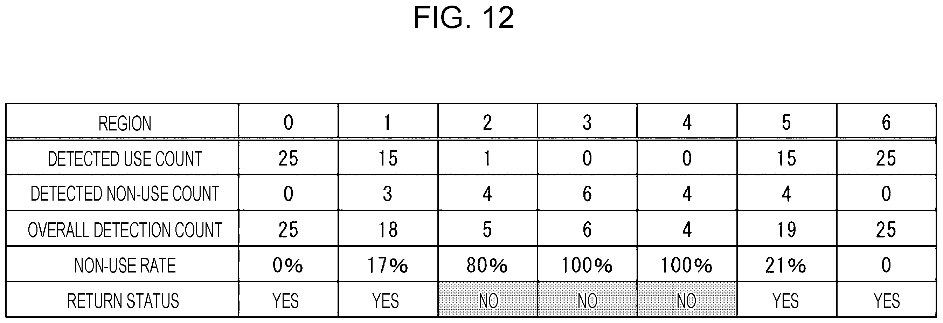

Fig. 11 illustrates an installed state of an image forming apparatus 10 of a second example of the first exemplary embodiment. Fig. 12 illustrates a table listing the usage environment data of the image forming apparatus 10 of the second example. Referring to Fig. 11, the lower side of the image forming apparatus 10 denotes the front side of the image forming apparatus 10.

As illustrated in Fig. 11, both lateral sides and rear side of the image forming apparatus 10 of the second example are surrounded by a partition. There are cabinets across the passage from the front side of the image forming apparatus 10 (on the lower side of the image forming apparatus 10 in Fig. 11).

In this installed state, a person who simply passes by and does not use the image forming apparatus 10 may approach the image forming apparatus 10.

During the specific period of time starting with the installation of the image forming apparatus 10, the controller 31 in the image forming apparatus 10 acquires the usage environment data listed in Fig. 12 in accordance with detection detected status provided by the light sensor 18 and usage status of the image forming apparatus 10. The usage environment data is periodically updated and the setting of the usage environment data is also updated.

In the usage environment data in Fig. 12, the non-use rate is higher than the predetermined threshold (for example, 70%) in the regions A2, A3 and A4 of the detection zone R on the front side of the image forming apparatus 10 and, in other words, the expected value at which the image forming apparatus 10 is used after the object enters each of the regions is lower than the predetermined threshold. For this reason, the controller 31 sets the regions A2, A3 and A4 to no-return status (the first region).

### Third Example

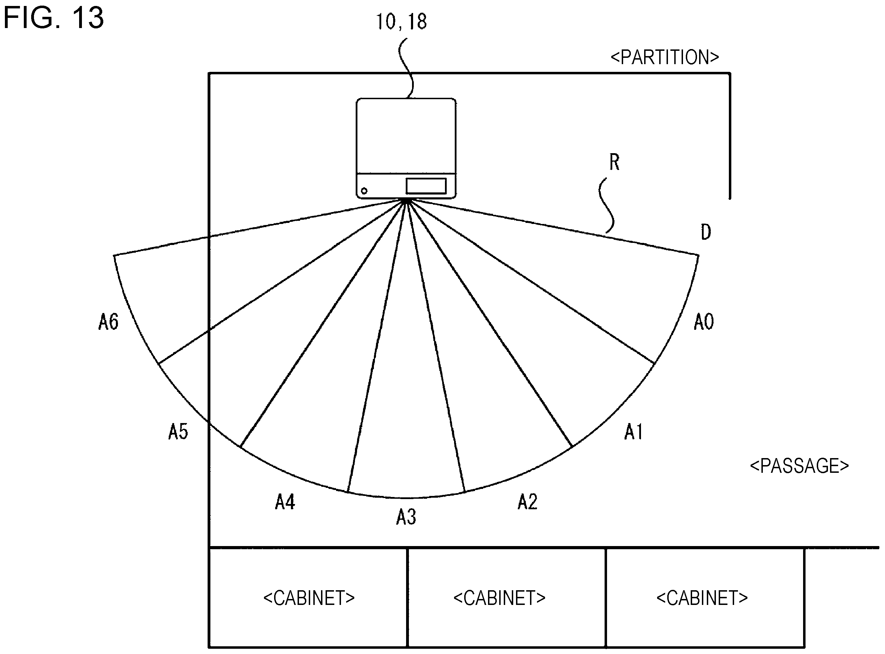

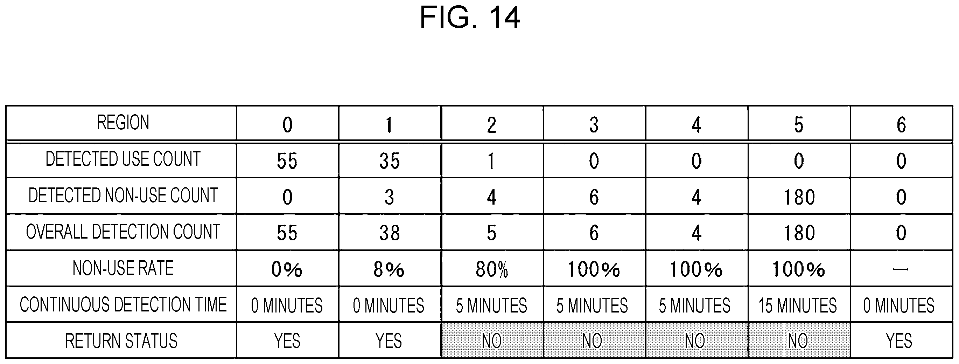

Fig. 13 illustrates an installed state of an image forming apparatus 10 of a third example of the first exemplary embodiment. Fig. 14 illustrates a table listing the usage environment data of the image forming apparatus 10 of the third example. Referring to Fig. 13, the lower side of the image forming apparatus 10 denotes the front side of the image forming apparatus 10.

As illustrated in Fig. 13, both lateral sides and rear side of the image forming apparatus 10 of the third example are surrounded by a partition. There are cabinets across space from the front side of the image forming apparatus 10 (on the lower side of the image forming apparatus 10 in Fig. 13). The partition on the right side of the image forming apparatus 10 (the left side of the image forming apparatus 10 in Fig. 13) continues to the cabinet in front of the image forming apparatus 10.

In this installed state, a person who uses a cabinet but does not use the image forming apparatus 10 may approach the image forming apparatus 10. The border of the region A5 in the detection zone R on the right side of the image forming apparatus 10 overlaps the partition and the border of the region A6 in the detection zone R on the right side of the image forming apparatus 10 extends beyond the partition.

During the specific period of time from the installation of the image forming apparatus 10, the controller 31 in the image forming apparatus 10 acquires the usage environment data listed in Fig. 14 in accordance with detected status provided by the light sensor 18 and usage status of the image forming apparatus 10. The usage environment data is periodically updated and the setting of the usage environment data is also updated.

In the usage environment data in Fig. 14, the non-use rate is higher than the predetermined threshold (for example, 70%) in the regions A2, A3, A4 and A5 in the detection zone R from the front to the right side of the image forming apparatus 10 and, in other words, the expected value at which the image forming apparatus 10 is used after the object enters each of the regions is lower than the predetermined threshold. For this reason, the controller 31 sets the regions A2, A3, A4 and A5 to no-return status (the first region).

In the rightmost region A6 of the detection zone R, the presence of the partition disables the detection beyond the detection zone Rand the number of detections is zero in the data in Fig. 14. The zero detection does not lead to any shifting and thus no increase is caused in the power consumption in the region A6.

If the usage environment data includes continuous detection time on each region as illustrated in Fig. 14, the controller 31 may make no-return setting, specifically, may set the region to the first region. Specifically, if the continuous detection time is equal to or higher than a predetermined threshold (for example, 15 minutes), the controller 31 may make no-return setting (the first region). Since the partition is detected in the region A5, the controller 31 may invalidate the detection by making the no-return setting after the continuous detection of 15 minutes or longer.

### Second Exemplary Embodiment

An image forming apparatus 10 of a second exemplary embodiment is described below. The image forming apparatus 10 of the second exemplary embodiment is configured to switchably select a first power consumption mode, a second power consumption mode and a third power consumption mode. The first power consumption mode is a power saving mode in which the image forming apparatus 10 consumes the lowest power. The second power consumption mode is a half-startup mode in which the image forming apparatus 10 consumes power higher than in the first power consumption mode. The third power consumption mode is a startup mode in which the image forming apparatus 10 consumes power higher in the second power consumption mode. The discussion of the image forming apparatus 10 identical in configuration to the image forming apparatus 10 of the first exemplary embodiment is not repeated herein.

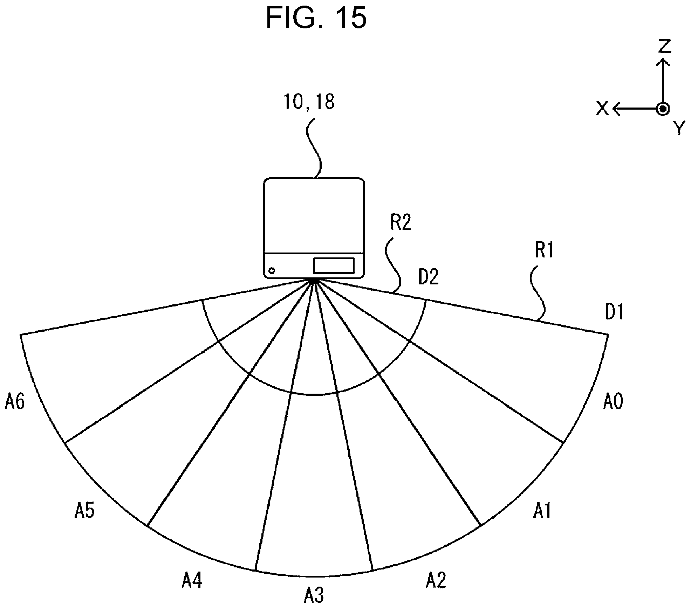

The detection of an object by the light sensor 18 in the image forming apparatus 10 of the second exemplary embodiment is described in detail below. Fig. 15 illustrates a detection zone of the light sensor 18 of the second exemplary embodiment.

The light sensor 18 in the image forming apparatus 10 of the second exemplary embodiment is configured to detect the presence of an object in each of a first detection zone R1 divided in multiple regions and a second detection zone R2 closer to the image forming apparatus 10 than the first detection zone R1.

Referring to Fig. 15, the first detection zone R1 is a sector of a radius D1 with respect to the light sensor 18. The light sensor 18 of the second exemplary embodiment detects, on a per region basis, the presence of an object in each of the seven regions A0 through A6 of the detection zone R corresponding to the seven light emission regions B of the VCSEL array 40. For example, the first detection zone R1 is set to be 1.75 m.

The second detection zone R2 is a sector of a radius D2 with respect to the light sensor 18. For example, the second detection zone R2 is set to be 0.6 m.

The controller 31 sets a subset of the regions of the first detection zone R1 (the seven regions A0 through A6 in the second exemplary embodiment) to be the first region.

If an object enters the first region with the image forming apparatus 10 in the first power consumption mode, the controller 31 causes the image forming apparatus 10 not to shift from the first power consumption mode to the second power consumption mode. If an object enters a second region different from the first region in the first detection zone R1 with the image forming apparatus 10 in the first power consumption mode, the controller 31 causes the image forming apparatus 10 to shift from the first power consumption mode to the second power consumption mode. If an object enters the second detection zone R2 with the image forming apparatus 10 in the second power consumption mode, the controller 31 causes the image forming apparatus 10 to shift from the second power consumption mode to the third power consumption mode.

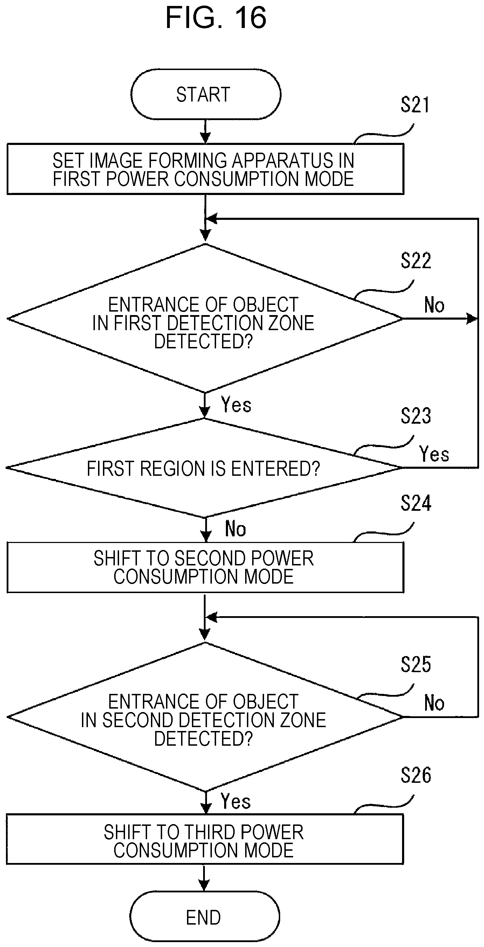

The process flow of the power consumption control of the image forming apparatus 10 according to the second exemplary embodiment is described below with reference to a flowchart in Fig. 16.

If an initial state indicates no object present in the first detection zone R1 of the light sensor 18 or an object present in the first region of the first detection zone R1 of the light sensor 18, the controller 31 sets in step S21 the image forming apparatus 10 to the first power consumption mode that consumes the lowest power.

In step S22, the controller 31 determines whether the entrance of an object into the first detection zone R1 of the light sensor 18 is detected.

In step S22, the controller 31 waits on standby until the entrance of an object is detected.

If it is determined in step S22 that the entrance of an object has been detected, the controller 31 determines in step S23 whether the object has entered the first region as one of the regions of the first detection zone R1.

If it is determined in step S23 that the object has entered the first region, the controller 31 proceeds to step S22 and waits on standby until a new object enters the detection zone.

If it is determined in step S23 that the object has not entered the first region (in other words, the object has entered the second region), the controller 31 causes in step S 24 the image forming apparatus 10 to shift to the second power consumption mode.

The controller 31 determines in step S25 whether the entrance of an object into the second detection zone R2 of the light sensor 18 has been detected.

The controller 31 waits on standby in step S25 until the entrance of an object has been detected.

If it is determined in step S25 that the entrance of an object has been detected, the controller 31 causes the image forming apparatus 10 in step S26 to shift to the third power consumption mode. If an object has passed by, the controller 31 may stay in step S25 and then return, after a predetermined period of time, to step S21 for power reduction. If the object is no longer detected in step S25, the controller 31 may return to step S21 for power reduction.

### Modifications

The information processing system of the exemplary embodiments of the disclosure has been described. The technique of the disclosure is not limited to the exemplary embodiments described above and may be appropriately modified.

According to the exemplary embodiments, the technique of the disclosure is applied to the image forming apparatus 10. The technique of the disclosure is not limited to the image forming apparatus 10. For example, the technique of the disclosure may be applied to an information processing system, which is approached by the user for operation, such as an automatic teller machine (ATM) or ticket vending machine.

According to the exemplary embodiments, the "system" refers to a system including one or more apparatuses.

In the exemplary embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a light sensor enabled to detect, on a per region basis, a presence of an object in a detection zone divided into multiple regions; and
   a processor configured to:
      set to be a first region each of the regions having an expected value lower than a predetermined threshold, the expected value calculated in accordance with a use count at which an information processing apparatus is used during a predetermined period of time from the detection of the object in the region in the detection zone; and
      if the object enters the first region with the information processing apparatus in a first power consumption mode, cause the information processing apparatus not to shift from the first power consumption mode to a second power consumption mode higher in power consumption than the first power consumption mode.
(((2))) In the information processing system according to (((1))), the processor is configured to:
   if the object enters a second region different from the first region in the detection zone, cause the information processing apparatus to shift from the first power consumption mode to the second power consumption mode.
(((3))) In the information processing system according to one of (((1))) and (((2))), the processor is configured to:
   if the object is detected, during the predetermined period of time from the detection of the object in the region, in a detection zone that is closer to the information processing apparatus than the region is to the information processing apparatus, calculate the expected value, based on an assumption that the information processing apparatus has been used.
(((4))) In the information processing system according to one of (((1))) and (((2))), the processor is configured to:
   if an operation unit has received an operation during the predetermined period of time from the detection of the object in the region, calculate the expected value, based on an assumption that the information processing apparatus has been used.
(((5))) In the information processing system according to one of (((1))) through (((4))), the processor is configured to:
   if the object has been continuously detected for the predetermined period of time or longer in the region, set the region to be the first region.
(((6))) In the information processing system according to one of (((1))) through (((5))), the processor is configured to cause the light sensor to stop detecting light in the first region.
(((7))) In the information processing system according to one of (((1))) through (((5))), the processor is configured to:
   even when the light sensor has detected the object in the first region, cause the information processing apparatus not to shift from the first power consumption mode to the second power consumption mode.
(((8))) An image forming system including:
   a light sensor enabled to detect a presence of an object in each of a first detection zone divided into multiple regions and a second detection zone that is closer to an image forming apparatus than the first detection zone is; and
   a processor configured to:
      set to be a first region each of the regions having an expected value lower than a predetermined threshold, the expected value calculated in accordance with a use count at which an information processing apparatus is used during a predetermined period of time from the detection of the object in the region in the first detection zone;
      if the object enters the first region with the image forming apparatus in a first power consumption mode, cause the image forming apparatus not to shift from the first power consumption mode to a second power consumption mode higher in power consumption than the first power consumption mode;
      if the object enters a second region different from the first region in the first detection zone, cause the image forming apparatus to shift from the first power consumption mode to the second power consumption mode; and
      if the object enters the second detection zone with the image forming apparatus in the second power consumption mode, cause the image forming apparatus to shift from the second power consumption mode to a third power consumption mode higher in power consumption than the second power consumption mode.
(((9))) A program causing a computer to execute a process, the process including:
   detecting, on a per region basis, a presence of an object in a detection zone divided into multiple regions;
   setting to be a first region each of the regions having an expected value lower than a predetermined threshold, the expected value calculated in accordance with a use count at which an information processing apparatus is used during a predetermined period of time from the detection of the object in the region in the detection zone; and
   if the object enters the first region with the information processing apparatus in a first power consumption mode, causing the information processing apparatus not to shift from the first power consumption mode to a second power consumption mode higher in power consumption than the first power consumption mode.
(((10))) A program causing a computer to execute a process, the process including:
   detecting a presence of an object in each of a first detection zone divided into multiple regions and a second detection zone that is closer to an image forming apparatus than the first detection zone is;
   setting to be a first region each of the regions having an expected value lower than a predetermined threshold, the expected value calculated in accordance with a use count at which an information processing apparatus is used during a predetermined period of time from the detection of the object in the region in the first detection zone;
   if the object enters the first region with the image forming apparatus in a first power consumption mode, causing the image forming apparatus not to shift from the first power consumption mode to a second power consumption mode higher in power consumption than the first power consumption mode;
   if the object enters a second region different from the first region in the first detection zone, causing the image forming apparatus to shift from the first power consumption mode to the second power consumption mode; and
   if the object enters the second detection zone with the image forming apparatus in the second power consumption mode, causing the image forming apparatus to shift from the second power consumption mode to a third power consumption mode higher in power consumption than the second power consumption mode.

The effects of the configurations described with reference to the appendix are described below.

The information processing system according to (((1))) may lead to a lower power consumption in the information processing apparatus than when the information processing apparatus is shifted from the power saving mode to the startup mode in response to detection results that are obtained by simply detecting any object within the detection zone.

The information processing system according to (((2))) may lead to a lower power consumption in the information processing apparatus than when the information processing apparatus is shifted from the power saving mode to the startup mode in response to detection results that are obtained by simply detecting any object within the detection zone.

The information processing system according to (((3))) may calculate a use rate of the information processing apparatus depending on whether the object is detected, during the predetermined period of time from the detection of the object in the region, in a detection zone that is closer to the information processing apparatus than the region is to the information processing apparatus.

The information processing system according to (((4))) may calculate the use rate of the information processing apparatus depending on whether the information processing apparatus is operated by the user during the predetermined period of time from the detection of the object in the region.

The information processing system according to (((5))) may cause the information processing apparatus not to shift from the power saving mode to the startup mode even when the object enters a region where the information processing apparatus is not likely to be used.

The information processing system according to (((6))) may lead to a lower power consumption in the information processing apparatus than when the object in the first region is detected by the light sensor.

The information processing system according to (((7))) may cause the information processing apparatus not to shift from the power saving mode to the startup mode even when the object enters the first region with the light sensor unchanged in detection setting.

The image forming system according to (((8))) may lead to a lower power consumption in the image forming apparatus than when the image forming apparatus is shifted from the power saving mode to the startup mode in response to detection results that are obtained by simply detecting any object within the detection zone.

The program according to (((9))) may lead to a lower power consumption in the information processing apparatus than when the information processing apparatus is shifted from the power saving mode to the startup mode in response to detection results that are obtained by simply detecting any object within the detection zone.

The program according to (((10))) may lead to a lower power consumption in the image forming apparatus than when the image forming apparatus is shifted from the power saving mode to the startup mode in response to detection results that are obtained by simply detecting any object within the detection zone.

## Claims

1. An information processing system comprising:
a light sensor enabled to detect, on a per region basis, a presence of an object in a detection zone divided into a plurality of regions; and
a processor configured to:
set to be a first region each of the regions having an expected value lower than a predetermined threshold, the expected value calculated in accordance with a use count at which an information processing apparatus is used during a predetermined period of time from the detection of the object in the region in the detection zone; and
if the object enters the first region with the information processing apparatus in a first power consumption mode, cause the information processing apparatus not to shift from the first power consumption mode to a second power consumption mode higher in power consumption than the first power consumption mode.

2. The information processing system according to claim 1, wherein the processor is configured to:
if the object enters a second region different from the first region in the detection zone, cause the information processing apparatus to shift from the first power consumption mode to the second power consumption mode.

3. The information processing system according to one of claims 1 and 2, wherein the processor is configured to:
if the object is detected, during the predetermined period of time from the detection of the object in the region, in a detection zone that is closer to the information processing apparatus than the region is to the information processing apparatus, calculate the expected value, based on an assumption that the information processing apparatus has been used.

4. The information processing system according to one of claims 1 and 2, wherein the processor is configured to:
if an operation unit has received an operation during the predetermined period of time from the detection of the object in the region, calculate the expected value, based on an assumption that the information processing apparatus has been used.

5. The information processing system according to one of claims 1 through 4, wherein the processor is configured to:
if the object has been continuously detected for the predetermined period of time or longer in the region, set the region to be the first region.

6. The information processing system according to one of claims 1 through 5, wherein the processor is configured to cause the light sensor to stop detecting light in the first region.

7. The information processing system according to one of claims 1 through 5, wherein the processor is configured to:
even when the light sensor has detected the object in the first region, cause the information processing apparatus not to shift from the first power consumption mode to the second power consumption mode.

8. An image forming system comprising:
a light sensor enabled to detect a presence of an object in each of a first detection zone divided into a plurality of regions and a second detection zone that is closer to an image forming apparatus than the first detection zone is; and
a processor configured to:
set to be a first region each of the regions having an expected value lower than a predetermined threshold, the expected value calculated in accordance with a use count at which an information processing apparatus is used during a predetermined period of time from the detection of the object in the region in the first detection zone;
if the object enters the first region with the image forming apparatus in a first power consumption mode, cause the image forming apparatus not to shift from the first power consumption mode to a second power consumption mode higher in power consumption than the first power consumption mode;
if the object enters a second region different from the first region in the first detection zone, cause the image forming apparatus to shift from the first power consumption mode to the second power consumption mode; and
if the object enters the second detection zone with the image forming apparatus in the second power consumption mode, cause the image forming apparatus to shift from the second power consumption mode to a third power consumption mode higher in power consumption than the second power consumption mode.

9. A program causing a computer to execute a process, the process comprising:
detecting, on a per region basis, a presence of an object in a detection zone divided into a plurality of regions;
setting to be a first region each of the regions having an expected value lower than a predetermined threshold, the expected value calculated in accordance with a use count at which an information processing apparatus is used during a predetermined period of time from the detection of the object in the region in the detection zone; and
if the object enters the first region with the information processing apparatus in a first power consumption mode, causing the information processing apparatus not to shift from the first power consumption mode to a second power consumption mode higher in power consumption than the first power consumption mode.

10. A program causing a computer to execute a process, the process comprising:
detecting a presence of an object in each of a first detection zone divided into a plurality of regions and a second detection zone that is closer to an image forming apparatus than the first detection zone is;
setting to be a first region each of the regions having an expected value lower than a predetermined threshold, the expected value calculated in accordance with a use count at which an information processing apparatus is used during a predetermined period of time from the detection of the object in the region in the first detection zone;
if the object enters the first region with the image forming apparatus in a first power consumption mode, causing the image forming apparatus not to shift from the first power consumption mode to a second power consumption mode higher in power consumption than the first power consumption mode;
if the object enters a second region different from the first region in the first detection zone, causing the image forming apparatus to shift from the first power consumption mode to the second power consumption mode; and
if the object enters the second detection zone with the image forming apparatus in the second power consumption mode, causing the image forming apparatus to shift from the second power consumption mode to a third power consumption mode higher in power consumption than the second power consumption mode.

11. An information processing method comprising:
detecting, on a per region basis, a presence of an object in a detection zone divided into a plurality of regions;
setting to be a first region each of the regions having an expected value lower than a predetermined threshold, the expected value calculated in accordance with a use count at which an information processing apparatus is used during a predetermined period of time from the detection of the object in the region in the detection zone; and
if the object enters the first region with the information processing apparatus in a first power consumption mode, causing the information processing apparatus not to shift from the first power consumption mode to a second power consumption mode higher in power consumption than the first power consumption mode.

12. An image forming method comprising:
detecting a presence of an object in each of a first detection zone divided into a plurality of regions and a second detection zone that is closer to an image forming apparatus than the first detection zone is;
setting to be a first region each of the regions having an expected value lower than a predetermined threshold, the expected value calculated in accordance with a use count at which an information processing apparatus is used during a predetermined period of time from the detection of the object in the region in the first detection zone;
if the object enters the first region with the image forming apparatus in a first power consumption mode, causing the image forming apparatus not to shift from the first power consumption mode to a second power consumption mode higher in power consumption than the first power consumption mode;
if the object enters a second region different from the first region in the first detection zone, causing the image forming apparatus to shift from the first power consumption mode to the second power consumption mode; and
if the object enters the second detection zone with the image forming apparatus in the second power consumption mode, causing the image forming apparatus to shift from the second power consumption mode to a third power consumption mode higher in power consumption than the second power consumption mode.
